# EUROPÄISCHE PATENTSCHRIFT

(11) **EP 2 156 811 B1**
(45) Veröffentlichungstag und Bekanntmachung des Hinweises auf die Patenterteilung: **22.03.2017**
(21) Anmeldenummer: 08162751.5
(22) Anmeldetag: 21.08.2008
(51) Int. Cl.: A61C 8/00

(54) **Aussenbehälter für einen Implantatträger**
External container for an implant holder
Récipient extérieur pour un support d'implant

(43) Veröffentlichungstag der Anmeldung: 24.02.2010
(73) Patentinhaber: Straumann Holding AG, 4002 Basel (CH)
(72) Erfinder: Bammerlin, Rainer, 79400, Kandem (DE); Guenter, Daniel, 4437, Waldenburg (CH)
(74) Vertreter: Modiano, Micaela Nadia

(56) Entgegenhaltungen:
- EP-A- 1 145 692
- EP-A- 1 252 866
- EP-A- 1 523 955
- WO-A-00/02496
- WO-A-2006/052478

## Beschreibung

### Anwendungsgebiet der Erfindung

Die vorliegende Erfindung betrifft einen Außenbehälter für die Aufnahme eines Implantatträgers, im Besonderen für Implantatträger für die Dentaltechnik oder Dentalimplantatträger, der ein Schrauben- oder zylinderförmiges Implantat aufnehmen.. Dieser Außenbehälter dient zum Schutz des Implantatträgers mit einem daran angebrachten Implantat vor äußeren Einflüssen, wie Beschädigung und/oder Verschmutzung.

Solche Außenbehälter haben die Funktion, den Implantataufbau, umfassend das Dentalimplantat, den Implantatträger und ein Halteelement, sicher zu transportieren und zur Lagerung eine sterile Umgebung bereitzustellen. Zur Entnahme des Implantatträgers, während eines unter chirurgischen Eingriffs, entnimmt man den Implantatträger aus dem Außenbehälter, dann entnimmt man das Dentalimplantat aus dem Implantatträger und setzt das Dentalimplantat auf die vorbereitete Implantatstelle des Patienten ein und entfernt abschließend das Halteelement.

### Stand der Technik

Aus der EP 1 523 955 ist ein Außenbehälter für einen Implantatträger bekannt, bei dem eine Außenkapsel mit einem Deckel schraubend verschlossen wird. Der Deckel wird zum sicheren Verschluss mit dem zylinderförmigen Rumpfteil verschraubt und ggf. verklebt. Zusätzlich weist der Außenbehälter einen Knopf zur Freigabe des Implantatträgers auf. Der Deckel ist zweiteilig ausgebildet, wobei ein erster Teil den Deckel zur Verschraubung mit dem zylindrischen Rumpfteil bildet und ein zweiter Teil, der als Knopf ausgebildet ist, den im Außenbehälter befindlichen Implantatträger freigeben kann. Ein ringförmiges Element, das sich an einer Zunge des Deckels befindet, rastet beim Aufschrauben des Deckels an einer entsprechenden Ausnehmung am Implantatträger ein und fixiert so den Implantatträger im Außenbehälter und hält ihn bei Entnahme des Implantatträgers. Die Schraubverbindung hat jedoch zur Folge, das das ringförmige Element durch das feste Verschrauben des Deckels aus einem entspannten Lagerzustand gerät. Durch die dadurch während der Verschraubung ständig ausgeübte Krafteinwirkung ermüdet die Feder und verliert so ihre Elastizität, da sie ständig in einem gespannten Zustand verbleibt. Somit kann der Implantatträger beim Herausnehmen, bzw. Abschrauben des Deckels von diesem abfallen, da eine ausreichende Haltekraft nicht mehr gegeben ist. Darüberhinaus müssen derartige Implantate bis zur Implantation steril gehalten werden und weisen u.a. sehr filigrane Strukturen auf, demzufolge muss ein Außenbehälter sowohl eine keimfreie Umgebung, als auch eine Widerstandsfähigkeit gegen Erschütterungen bereitstellen, um eine Beschädigung des Implantats zu vermeiden. Aus der WO-A1-00/024 96 bzw. EP-A2-1 145 692 A2 ist ein Außenbehälter gemäß Oberbegriff des Anspruchs 1 bekannt.

### Zusammenfassung der Erfindung

Die EP-A1-1 252 866 beschreibt einen Außenbehälter für eine Ampoule, worin die Ampoule axial zwischen einer Schulter des Deckels des Außenbehälters und einer am Boden des Außenbehälters gebildeten Aufsetzschulter gesichert wird.

Der vorliegenden Erfindung liegt die Aufgabe zugrunde, die oben angeführten Nachteile bekannter Außenbehälter für Implantatträger zu überkommen und einen Außenbehälter bereitzustellen, der ein Herausfallen aus dem Implantatträger verhindert, eine verlängerte Lagerung ermöglicht und eine Materialermüdung vermeidet.

Im Rahmen dieser Aufgabe besteht eine weitere Aufgabe der vorliegenden Erfindung darin, einen Außenbehälter für einen Implantatträger mit einer verbesserten Verbindungstechnik zwischen dem Außenbehälter und einem Implantatträger bereitzustellen.

Im Rahmen dieser Aufgabe besteht eine zusätzliche Aufgabe der vorliegenden Erfindung darin, einen Außenbehälter für einen Implantatträger zu realisieren, der dicht verschlossen ist, um ihn mit einer Schutzflüssigkeit zu befüllen.

Eine weitere Aufgabe der vorliegenden Erfindung besteht darin, dass der Außenbehälter für einen Implantatträger unkompliziert und kostengünstig mit herkömmlichen Verfahren und Materialien hergestellt werden kann.

Die oben angeführten Aufgaben und weitere der nachfolgenden Beschreibung zu entnehmenden Aufgaben werden durch einen Außenbehälter für einen Implantatträger gemäß Anspruch 1 erfüllt. Weitere vorteilhafte Ausführungsformen der vorliegenden Erfindung sind Gegenstand der Unteransprüche.

### Kurzbeschreibung der Figuren

Weitere Merkmale und Vorteile der vorliegenden Erfindung sowie die Wirkungsweise der exemplarischen Ausführungsformen der vorliegenden Erfindung werden unten mit Bezug auf die begleitenden Zeichnungen beschrieben.

Die begleitenden Zeichnungen veranschaulichen die vorliegende Erfindung und dienen zusammen mit der Beschreibung weiterhin dazu, die Grundsätze der Erfindung zu erklären und es einem Fachmann auf dem betreffenden Gebiet zu ermöglichen, die Erfindung herzustellen und zu verwenden. Zur besseren Übersicht wird auf die Bezeichnungen von gleichen Elementen in nachfolgenden Figuren meist verzichtet, sofern diese eindeutig als "wiederholte Elemente" erkennbar sind.

Dabei zeigen:
Fig. 1 eine Längsschnitt eines Außenbehälters für einen Implantatträger gemäß einer Ausführungsform der Erfindung;
Fig. 1A eine perspektivische Ansicht eines Außenbehälters für einen Implantatträger gemäß Fig. 1;
Fig. 2 ein Längsschnitt eines zylindrischen Rumpfteils eines Außenbehälters an der Schnittlinie A-A gemäß Fig. 2A;
Fig. 2A eine Unteransicht eines zylindrischen Rumpfteils eines Außenbehälters gemäß Fig. 2;
Fig. 2B eine perspektivische Ansicht eines zylindrischen Rumpfteils eines Außenbehälters gemäß Fig. 2;
Fig. 3 eine Seitenansicht eines Deckels eines Außenbehälters gemäß einer Ausführungsform der Erfindung;
Fig. 3A eine Aufsicht eines Deckels eines Außenbehälters gemäß Fig. 3;
Fig. 3B eine Schnittansicht eines Deckels eines Außenbehälters an der Schnittlinie A-A gemäß Fig. 3A;
Fig. 3C eine perspektivische Aufsicht eines Deckels eines Außenbehälters gemäß Fig. 3;
Fig. 3D eine perspektivische Unteransicht eines Deckels eines Außenbehälters gemäß Fig. 3;

### Beschreibung der bevorzugten Ausführungsformen der Erfindung

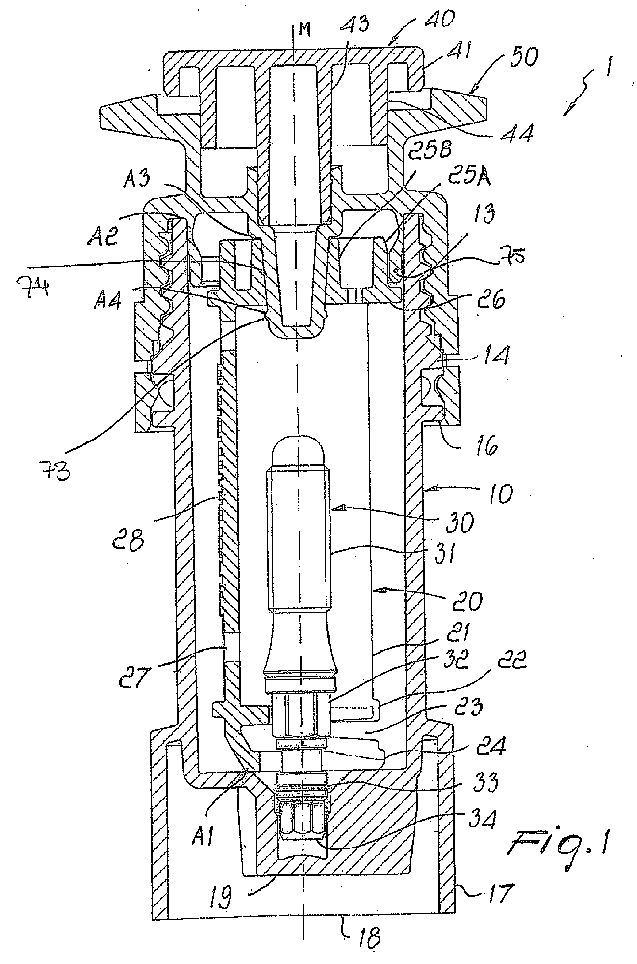

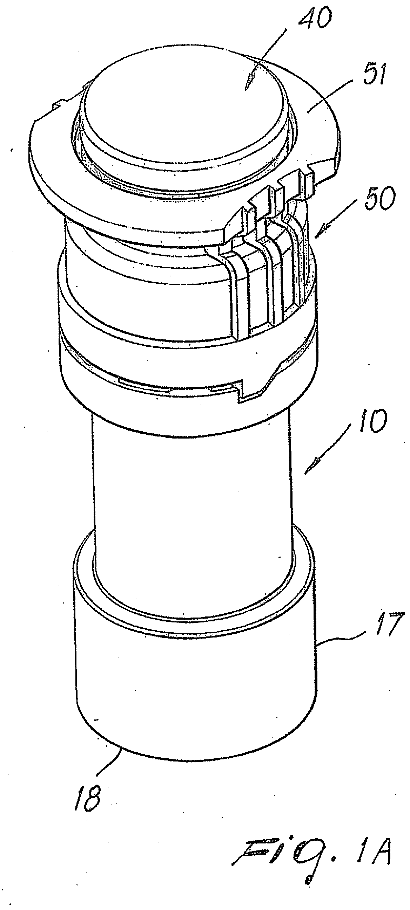

Anhand der nachfolgenden Figuren 1 bis 3D wird eine gegenwärtig bevorzugte Ausführungsform der vorliegenden Erfindung eines Außenbehälters 1 für einen Implantatträger 20 beschrieben, die aus einem im Wesentlichen zylindrischen Rumpfteil 10 und einem Deckel 50, der auf den zylinderförmigen Rumpfteil 10 aufgeschraubt wird, gebildet ist.

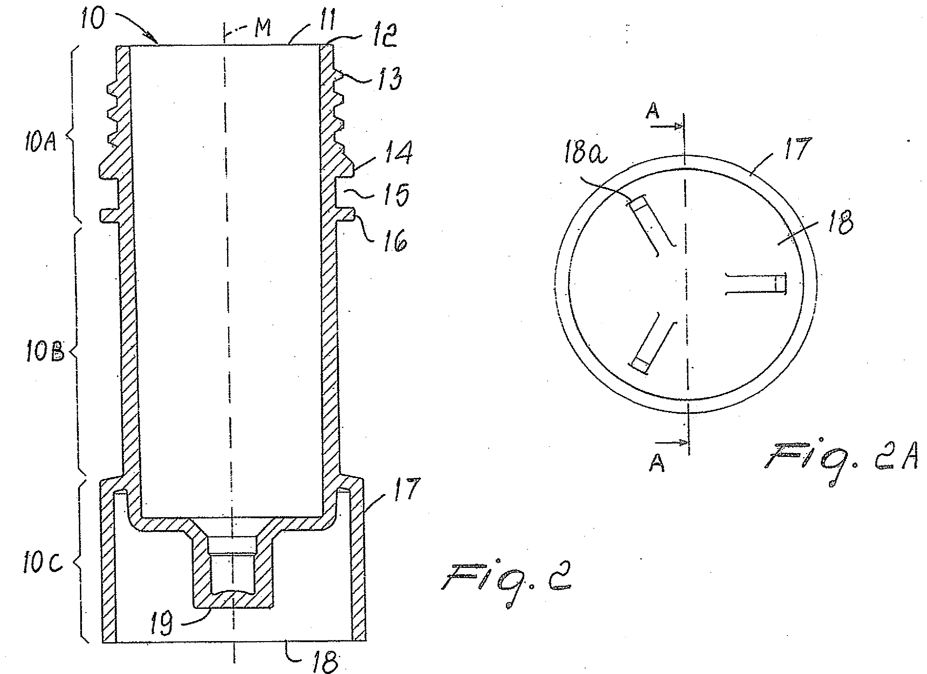

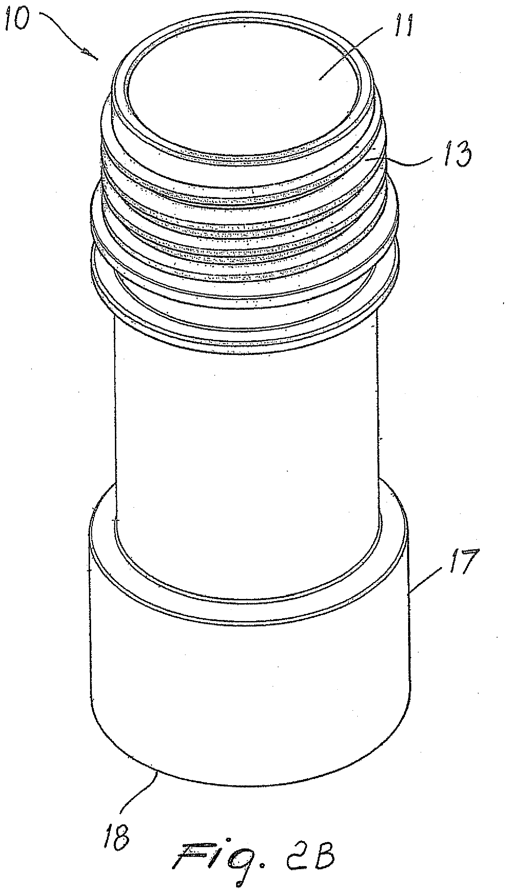

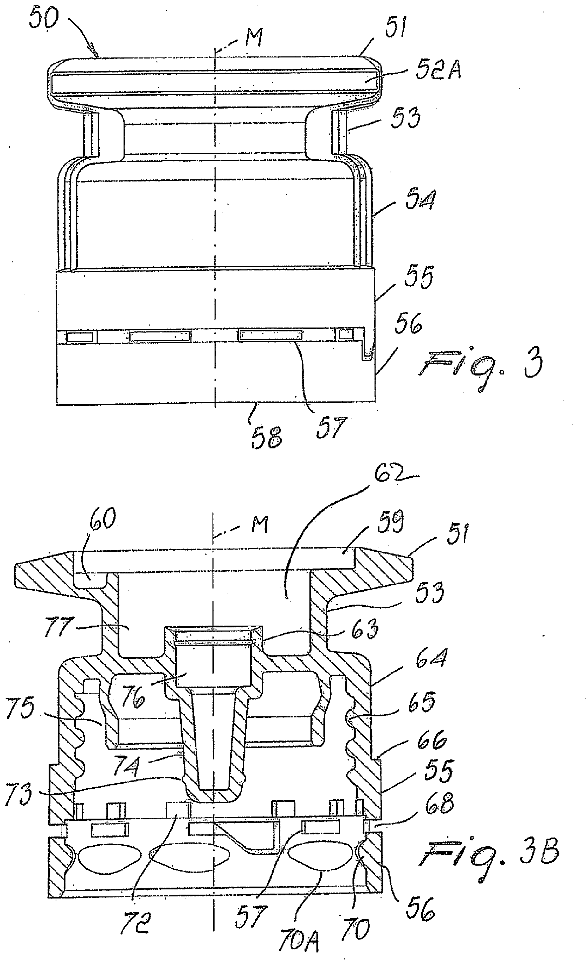

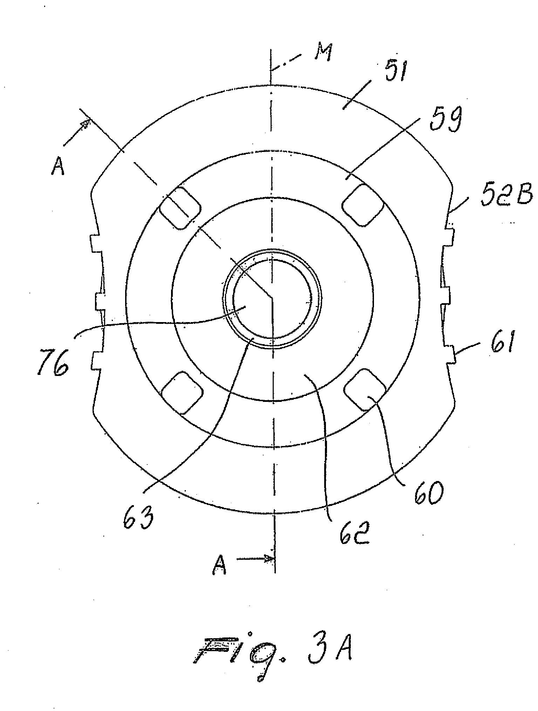

Figur 1 zeigt einen Längsschnitt eines Außenbehälters 1 für einen Implantatträger 20 mit einem darin fixierten Dentalimplantat 30. Das Dentalimplantat 30 ist mit einem Gewinde 31 (nachstehend zweites Gewinde) zum Verschrauben im Kiefer eines Patienten bereitgestellt, wobei das Dentalimplantat 30 auf einem Halteelement 32 aufgeschraubt ist und der zu implantierende Teil des Dentalimplantats 30 innerhalb des Implantatträgers 20 eingeschlossen ist. Der Implantatträger 20 weist einen Trägerschaft 21 auf, in dem das Dentalimplantat 30 plaziert ist. An den Trägerschaft 21 grenzt an einer Seite ein maulartiger Bereich 23 an, der sich zwischen einer ersten Platte 22 und einer zweiten Platte 24 ausbildet und zum Einschieben des Dentalimplantats 30 dient. An der Seite, auf der Verstärkungsrippen 28 angeordnet sind, ist ein Durchbruch 27 angeordnet. Zur Fixierung des Halteelements 32 ist innerhalb eines zylindrischen Fusses 17 eine Implantathalterung 19 vorgesehen, in die ein Polygonbereich 34 des Halteelements 32 eingesetzt wird, wobei zur zusätzlichen Stabilisierung des Halteelements 32 an der Eintrittsöffnung der Implantathalterung 19 ein Stützring 33 eingesetzt ist. Der im Außenbehälter 1 eingesetzte Implantatträger 20 wird von der dem Innenraum des Außenbehälters 1 zugewandten Fläche der Implantathalterung 19 gestützt, und bildet so einen ersten Anschlag A1, der zur Verklebung geeignet ist. Ein zweiter Anschlag A2 bildet sich an der Außenwandkante 12 (Fig.2) aus, die bei aufgeschraubtem Deckel 50 mit der Außenwandkante 12, der sich zwischen einem zungenartigen Element 75 und einem Gewinde 65 (nachstehend drittes Gewinde) des Deckels 50 befindet und ebenfalls vorteilhaft verklebbar ist. Ein erster rotationssymmetrischer Bereich 25A und ein zweiter rotationssymmetrischer Bereich 25B sind gemeinsam auf einer Verstärkungsplatte 26 des Implantatträgers 20 angeordnet. Zur weiteren Fixierung kann auch ein dritter Anschlag A3, der sich an der Berührungsstelle zwischen dem zweitem rotationssymmetrischen Bereich 25B und der Kante, die sich zwischen einem nachstehend beschriebenen kegelstumpfartigen Element 74 des Deckels 50 und einem ebenfalls nachstehend beschriebenen ersten Hohlraum 76 des Deckels 50 bildet, verklebt werden. Auch der Bereich einer nachstehend beschriebenen ringförmigen Muffe 73 des Deckels 50 bildet bei aufgesetztem Implantatträger 20 einen vierten Anschlag A4, der ebenfalls vorteilhaft verklebbar ist. Zur Befüllung des zylindrischen Rumpfteils 10 mit einer Schutzflüssigkeit sollte mindestens der erste Anschlag A1 verklebt sein, um eine dichten Bereich innerhalb des Hohlraums des zylindrischen Rumpfteils 10 herzustellen, so dass keine Flüssigkeit aus dem Außenbehälter 1 entweichen kann. Das zylindrische Rumpfteil 10 ist auf der dem Deckel 50 zugewandten Seite mit einem Gewinde 13 (nachstehend erstes Gewinde) versehen, um so den Deckel 50 auf dem zylindrischen Schaft 10 schraubend zu fixieren, wobei der Deckel 50 im verschraubten Zustand mit einer ersten Wulst 14 und einer zweiten Wulst 16 in Verbindung steht. Ein Knopf 40, mit einer Knopfseitenwand 41 und einer Stabilisierhülse 43 und einer Zwischenhülse 44 ist auf den Deckel 50 aufsteckbar, wie weiter unten zur Figur 3A beschreiben. Er kann vorteilhaft mit einer Farbcodierung versehen sein, um verschiedene im Außenbehälter 1 befindliche Dentalimplantate 30 zu identifizieren, was zum Beispiel durch die Verwendung von Farbcodierungen und/ oder Bezeichnungen zur Identifizierung eines Dentalimplantats erreicht wird (nicht dargestellt). Figur 1A zeigt verdeutlichend die bereits beschriebenen Elemente aus Figur 1 in einer perspektivischen Darstellung. Der Deckel 50 kann mit dem Knopf 40 auch verklebt oder einstückig ausgebildet werden.

Figur 2 zeigt den zylindrischen Rumpfteil 10 im Längsschnitt an der Schnittline A-A der Figur 2A, der in drei Bereiche unterteilt ist und zwar:
einem Fixierbereich 10A, der das erste Gewinde 13 zur Verschraubung mit dem Deckel 50 umfasst und die erste Wulst 14, die das erste Gewinde 13 abschließt. Zwischen der zweiten Wulst 16 befindet sich eine Ausnehmung 15, in die tropfenförmige Auswölbungen 70/70A (Figur 3B) eines Sicherungsrings 56 des Deckels 50 einrasten und sich an der zweiten Wulst 16 abstützen.
einen Schaftbereich 10B, der im Wesentlichen aus einem zylindrischen Hohlörper gebildet ist.
einen an den Schaftbereich 10B anschließende Bodenbereich 10C, der einen zylindrischen Fuß 17 mit einer darin innen eingeschlossenen Implantathalterung 19 und der Bodenplatte 18 umfasst, wobei wie in Figur 2A dargestellt, mindestens 3 Einprägungen 18A auf der Bodenplatte 18 ausgebildet sind, die im Winkel von 120 Grad radial angeordnet sind, und zum Einsetzen in eine Transporthalterung (nicht dargestellt) dienen. Figur 2B zeigt das zylindrische Rumpfteil 10 in einer perspektivischen Ansicht, wobei die Öffnung 11 zur Einführung des Implantatträgers 20, bzw. zum Befüllen mit einer Schutzflüssigkeit dient.

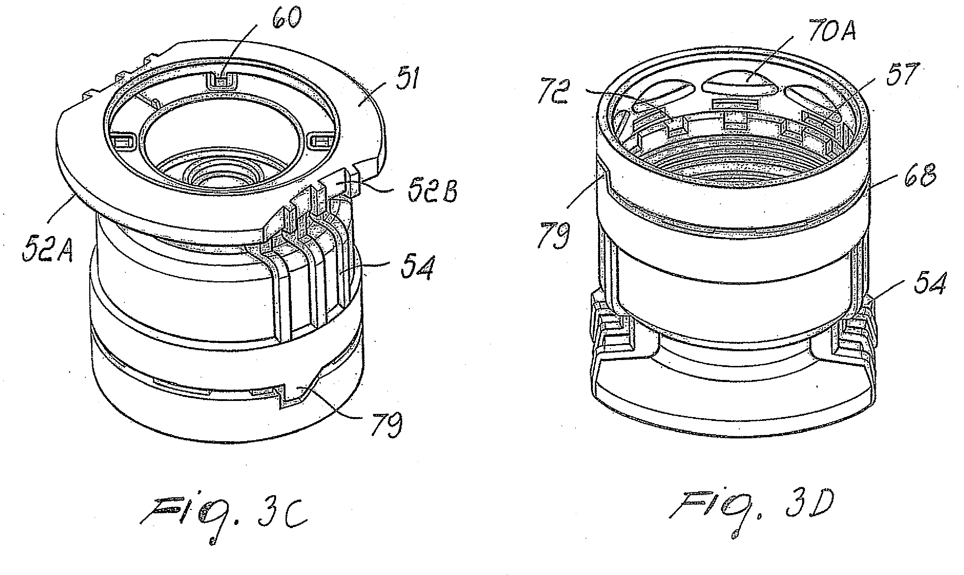

Figur 3 zeigt eine Seitenansicht eines Deckels 50 eines Außenbehälters 1 mit einer angeschrägten Stirnfläche 51 an die eine Stirnflächenkante 52A anschließt, wobei zwischen der Stirnfläche 51 und dem kappenförmigen Bereich 64 der Figur 3B ein Hals 53 ausgebildet ist. Der kappenförmige Bereich 64 besitzt an seiner äußeren Oberfläche streifenförmige Greifmittel 54, die eine gute Griffigkeit sowohl beim Auf-, als auch beim Abschrauben des Deckels 50 bereitstellen. An den kappenförmigen Bereich 64 schließt sich ein Deckelabnahmebereich 55 mit anschließendem Sicherungsring 56 an. Im Bereich zwischen Deckelabnahmebereich 55 und Sicherungsring 56 befindet sich eine Sollbruchstelle 57 in Form von rechteckigen Auskragungen, die in einer perimetrisch umlaufenden Vertiefung 68 angeordnet ist, und zur Ablösung des Deckels 50 geeignet sind. Der Sicherungsring 56 wird von einer Unterkante 58 abgeschlossen.

Figur 3A zeigt weitere Merkmale des Deckels 50 in einer Aufsicht, wobei die im Wesentlichen angeschrägte Stirnfläche 51 von zwei symmetrisch zur Mittelachse M angeordneten Stirnflächenkanteneinbuchtungen 52B (siehe Figur 3B) unterbrochen wird, die an Ihrer Oberfläche mit mindestens einem Zapfen 61 (siehe Figur 3B) bereitgestellt sind. Im Anschluss an die Stirnfläche 51 in Richtung des Mittelpunkts befindet sich eine erste Mulde 59, die anschließend in eine zweite Mulde 62 übergeht. Ein rotationssymmetrischer Zapfen 63 erhebt sich zentrisch aus der zweiten Mulde 62. Der rotationssymmetrische Zapfen 63 weist innen einen ersten Hohlraum 76 auf, der zur formschlüssigen Aufnahme der Stabilisierhülse 43 aus Figur 1 geeignet ist. Der rotationssymmetrische Zapfen 63, zusammen mit der ersten 59 und der zweiten 62 Mulde, bilden eine Aufnahme für den aufsetzbaren Knopf 40, der mittels einer angebrachten Codierung, z.B. Farbcodierung, unterschiedliche im Außenbehälter 1 befindliche Dentalimplantate 30 identifiziert und Verwechslungen unter den unterschiedlichen Ausführungen von Dentalimplantaten 30 ausschließt

Figur 3B zeigt eine Schnittansicht des Deckels 50 eines Außenbehälters 1 an der Schnittlinie A-A von Figur 3A, wobei der Deckel 50 zentrisch ein kegelstumpfartiges Element 74 aufweist, auf das der Implantatträger 20 aufgesetzt werden kann, wie in Figur 1 dargestellt. An einem dem zylindrischen Rumpfteil 10 zugewandten Ende, befindet sich mindestens eine ringförmige Muffe 73, die aus der Oberfläche hervorsteht. In einer bevorzugten Ausführungsform ist die ringförmige Muffe 73 als durchgehende perimetrische Umlaufkante ausgebildet. Alternativ kann die ringförmige Muffe 73 auch von einer Mehrzahl von perimetrischen Auswölbungen gebildet sein.

Zwischen dem kegelstumpfartigen Element 74 und dem Bereich des Deckels mit dem ersten Gewinde 13, ist ein zungenartiges Element 75 angeordnet, das im Montagezustand mit einem im Wesentlichen ersten rotationssymmetrischen Bereich 25A (Fig. 1) des Implantatträgers 20 mit einem gewissen Spiel in Verbindung steht und zur Führung des Implantatträgers 20 beim Einschieben dient. Darüberhinaus besteht im montierten Zustand ein Zwischenraum zwischen der Verstärkungsplatte 26 und dem unteren Bereich des zungenartigen Elements 75.

Bei Aufschrauben des Deckels 50 wird derart die gesamte Schraubkraft vom ersten Gewinde 13 des Implantatträgers 20 und dem dritten Gewinde 65 des Deckels 50 absorbiert, so dass keine zusätzliche Kraft auf das zungenartige Element 75 ausgeübt wird. Ein zweiter Hohlraum 77 des Deckels 50 dient zur Aufnahme der in der Figur 1 gezeigten Zwischenhülse 44 des Knopfes 40. Der kappenförmige Bereich 64 schließt sich dem Hals 53 an, daran anschließend befindet sich eine Stufe 66, die an den Deckelabnahmebereich 55 angrenzt.

Figur 3C zeigt eine perspektivische Aufsicht des Deckels 50, wobei eine Mehrzahl von Aussparungen 60 symmetrisch in der Oberfläche der ersten Mulde 59 angeordnet sind, die zum Fixieren des Deckels 50 geeignet sind. An dem Deckelabnahmebereich 55 ist eine an die perimetrisch umlaufende Vertiefung 68 (Fig. 3D) angrenzende Rastzunge 79 angeordnet, die in einen Ausschnitt im Sicherungsring 56 eingreift. Die Rastzunge 79 dient dazu, die Drehrichtung des Deckels 50 in Bezug auf den Sicherungsring 56 eindeutig festzulegen.

Die Figur 3D zeigt eine perspektivische Unteransicht eines Deckels 50 des Außenbehälters 1, wobei der in Figur 3 dargestellte Sicherungsring 56 auf seiner inneren Oberfläche auf der dem zylindrischen Rumpfteil 10 zugewandten Umfangsfläche tropfenförmige Auswölbungen 70 und 70A ausweist, die zum einrasten in die in Figur 2 dargestellten Ausnehmung 15 geeignet sind. Das Bezugszeichen 70 dient hierbei zur Verdeutlichung der tropfenförmigen Auswölbungen in der Schnittdarstellung. Den tropfenförmigen Auswölbungen 70A benachbart befindet sich in Richtung des Körperinneren des Deckels 50 die Sollbruchstelle 57, und zwischen den tropfenförmige Auswölbungen 70A und dem dritten Gewinde 65 ist ein zinnenförmiger Bereich 72 ausgebildet, der im verschraubten Zustand von Deckel 50 und zylinderförmigem Rumpfteil 10, mit der ersten Wulst 14 in Eingriff steht.

Die Komponenten des Außenbehälters 1, gebildet aus zylinderförmigem Rumpfteil 10, Deckel 50 und Knopf 40, können vorteilhaft mit herkömmlichen Verfahren, z. B. im Formguss hergestellt werden und bestehen bevorzugt aus Kunststoff. Mögliche Kunststoffmaterialien für das Außengehäuse ist cyclo-olefin copolymer (COC), welches FDA und CE zertifiziert ist, als medizinisch anwendbares Material und für die Kappe ist High-density Polyethylen (HDPE) oder low-density Polyethylen (LDPE) anwendbar, wobei aber auch andere Materialien, die die gleichen oder ähnliche Eigenschaften aufweisen, einsetzbar sind.

Gemäß einer gegenwärtig bevorzugten Ausgestaltung der Erfindung wird ein Außenbehälter 1 für einen Implantatträger 20 bereitgestellt folgendes umfassend: einen zylindrischen Rumpfteil 10 und einen den zylindrischen Rumpfteil 10 verschließenden Deckel 50, wobei der Deckel 50 mit einem in das zylindrische Rumpfteil 10 einragenden kegelstumpfartigen Element 74 bereitgestellt ist, wobei der Implantatträger 20 ein komplementär zu dem kegelstumpfartigen Element 74 ausgebildetes Loch 25B aufweist, welches das kegelstumpfartige Element 74 eng anliegend umschließt, wenn der Implantatträger 20 an dem Deckel 50 angebracht ist, und dass das kegelstumpfartige Element 74 ein ringförmiges Mittel 73 aufweist, welches das Loch 25B in einem Abstand hintergreift, wenn der Implantatträger 20 an dem Deckel 50 angebracht ist.

Wenn in irgendeinem der Ansprüche erwähnte technische Merkmale mit einem Bezugszeichen versehen sind, wurden diese Bezugszeichen lediglich eingeschlossen, um die Verständlichkeit der Ansprüche zu erhöhen. Entsprechend haben diese Bezugszeichen keine einschränkende Auswirkung auf den Schutzumfang eines jeden Elements, das exemplarisch durch solche Bezugszeichen bezeichnet wird.

### Bezugszeichenliste:

- M: Mittelachse
- A1 1.: Anschlag
- A2: 2. Anschlag
- A3: 3. Anschlag
- A4: 4. Anschlag
- 1: Außenbehälter
- 10: zylindrischer Rumpfteil
- 10A: Fixierbereich
- 10B: Schaftbereich
- 10C: Bodenbereich
- 11: Öffnung
- 12: Außenwandkante
- 13: erstes Gewinde
- 14: 1. Wulst
- 15: Ausnehmung
- 16: 2. Wulst
- 17: zylindrischer Fuß
- 18: Bodenplatte
- 18A: Einprägung
- 19: Implantathalterung
- 20: Implantatträger
- 21: Trägerschaft
- 22: 1. Platte
- 23: maulartiger Bereich
- 24: 2. Platte
- 25A: 1. rotationssymmetrischer Bereich
- 25B: 2. rotationssymmetrischer Bereich
- 26: Verstärkungsplatte
- 27: Durchbruch
- 28: Verstärkungsrippen
- 30: Dentalimplantat
- 31: zweites Gewinde
- 32: Halteelement
- 33: Stützring
- 34: Polygonbereich
- 40: Knopf
- 41: Knopfseitenwand
- 43: Stabilisierhülse
- 44: Zwischenhülse
- 50: Deckel
- 51: Stirnfläche
- 52A: Stirnflächenkante
- 52B: Stirnflächenkanteneinbuchtung
- 53: Hals
- 54: Greifmittel
- 55: Deckelabnahmebereich
- 56: Sicherungsring
- 57: Sollbruchstelle
- 58: Unterkante
- 59: 1. Mulde
- 60: Aussparung
- 61: Zapfen
- 62: 2. Mulde
- 63: rotationssymmetrischer Zapfen
- 64: kappenförmiger Bereich
- 65: drittes Gewinde
- 66: Kante
- 68: Vertiefung
- 70: Auswölbung
- 70A: tropfenförmige Auswölbung
- 72: zinnenförmiger Bereich
- 73: ringförmige Muffe
- 74: kegelstumpfartiges Element
- 75: zungenartiges Element
- 76: 1. Hohlraum
- 77: 2. Hohlraum
- 79: Rastzunge

## Patentansprüche

1. Außenbehälter (1) für einen Implantatträger (20) umfassend einen zylindrischen Rumpfteil (10) und einen den zylindrischen Rumpfteil (10) verschließenden Deckel (50), wobei der Deckel (50) mit einem in das zylindrische Rumpfteil (10) einragendes kegelstumpfartiges Element (74) bereitgestellt ist, **dadurch gekennzeichnet, dass** das kegelstumpfartige Element (74) einen Anschlag (A3) an seiner Basis und mindestens ein ringförmiges Mittel (73) auf seiner nach außen gewandten Oberfläche aufweist, um einen Implantatträger (20) zwischen dem Anschlag (A3) und dem ringförmigen Mittel (73) axial zu halten, wobei das ringförmige Mittel (73) derart ausgebildet ist, um den Implantatträger (20) lösbar in einer stabilen Lage zentrisch im Innenraum des zylindrischen Rumpfteils (10) zu fixieren.

2. Außenbehälter (1) für einen Implantatträger (20) nach Anspruch 1, wobei das ringförmige Mittel als ringförmigen Muffe (73) ausgebildet ist.

3. Außenbehälter (1) für einen Implantatträger (20) nach Anspruch 1 oder 2, wobei das ringförmige Mittel (73) als eine durchgehende perimetrische Umlaufkante ausgebildet ist.

4. Außenbehälter (1) für einen Implantatträger (20) nach Anspruch 1 oder 2, wobei das ringförmige Mittel (73) von einer Mehrzahl von perimetrischen Auswölbungen gebildet ist.

5. Außenbehälter (1) für einen Implantatträger (20) nach irgendeinem der voranstehenden Ansprüche, wobei der Deckel (50) ein zungenartiges Element (75) aufweist.

6. Außenbehälter (1) für einen Implantatträger (20) nach Anspruch 5, wobei das zungenartige Element (75) zur Führung des Implantatträgers (20) elastisch in entgegengesetzter Richtung zur Mittelachse (M) des Außenbehälters (1) verformbar ist.

7. Außenbehälter (1) für einen Implantatträger (20) nach irgendeinem der voranstehenden Ansprüche, wobei mindestens ein erster Anschlag (A1) am Außenbehälter (1) und ein zweiter Anschlag (A2) am Deckel (50) den Implantatträger (20) in einer stabilen Lage fixieren.

8. Außenbehälter (1) für einen Implantatträger nach Anspruch 7, wobei der zylindrische Rumpfteil (10) mit einer Flüssigkeit zur Lagerung befüllt ist.

9. Außenbehälter (1) für einen Implantatträger (20) nach Anspruch 8, wobei die Flüssigkeit zur Lagerung ein Elektrolyt ist.

10. Außenbehälter (1) für einen Implantatträger (20) nach irgendeinem der vorhergehenden Ansprüche, wobei das Herstellungsmaterial ein High-Density Polyethylen (HDPE) oder ein Low-Density Polyethylen (LDPE) Kunststoff ist.

11. Kombination aus einem Implantatträger (20) und einem Außenbehälter (1) nach irgendeinem der vorangehenden Ansprüche, wobei der Implantatträger (20) einen nach innen gerichteten rotationssymmetrischen Bereich (25B) aufweist, der zwischen dem Anschlag (A3) an der Basis des kegelstumpfartigen Elements (74) und dem ringförmigen Mitttel (73) axial gehalten ist.

12. Kombination nach Anspruch 11, wobei der Deckel (50) des Außenbehälters ein zungenartiges Element (75) aufweist und wobei der Implantatträger (20) einen im Wesentlichen ersten, nach außen gerichteten rotationssymmetrischen Bereich (25A) aufweist, wobei das zugenartige Element (50) in Verbindung mit dem ersten, nach außen gerichteten rotationssymmetrischen Bereich (25A) steht.

## Claims

1. External container (1) for an implant holder (20), comprising a cylindrical body part (10) and a lid (50) closing the cylindrical body part (10), the lid (50) being provided with a truncated cone-like element (74) protruding into the cylindrical body part (10), **characterized in that** the truncated cone-like element (74) has an abutment (A3) at its base and at least one annular means (73) at its surface which is directed outwards, so as to axially hold an implant holder (20) between the abutment (A3) and the annular means (73), the annular means (73) being configured such as to releasably fix the implant holder (20) in a stable position in the center of the interior space of the cylindrical body part (10).

2. External container (1) for an implant holder (20) according to Claim 1, the annular means being configured as an annular sleeve (73).

3. External container (1) for an implant holder (20) according to Claim 1 or 2, the annular means (73) being configured as a continuous perimetric circumferential edge.

4. External container (1) for an implant holder (20) according to Claim 1 or 2, the annular means (73) being formed by a plurality of perimetric bulges.

5. External container (1) for an implant holder (20) according to any one of the above Claims, the lid (50) having a tab-like element (75).

6. External container (1) for an implant holder (20) according to Claim 5, the tab-like element (75) being elastically deformable for guiding the implant holder (20) in the direction opposite to the central axis (M) of the external container (1).

7. External container (1) for an implant holder (20) according to any one of the above Claims, with at least one first abutment (A1) on the external container (1) and a second abutment (A2) on the lid (50) fixing the implant holder (20) in a stable position.

8. External container (1) for an implant holder according to Claim 7, the cylindrical body part (10) being filled with a liquid for storage.

9. External container (1) for an implant holder (20) according to Claim 8, the liquid for storage being an electrolyte.

10. External container (1) for an implant holder (20) according to any one of the above Claims, the production material being a high-density polyethylene (HDPE) or a low-density polyethylene (LDPE) plastic material.

11. Combination of an implant holder (20) and an external container (1) according to any one of the above Claims, the implant holder (20) having a rotationally symmetrical portion (25B) directed inwards which is axially held between the abutment (A3) at the base of the truncated cone-like element (74) and the annular means (73).

12. Combination according to Claim 11, the lid (50) of the external container having a tab-like element (75) and the implant holder (20) having a substantially first rotationally symmetrical portion (25A) directed outwards, the tab-like element (50) being in connection with the first rotationally symmetrical portion (25A) directed outwards.

## Revendications

1. Conteneur extérieur (1) pour un support d'implant (20) comportant une partie de corps cylindrique (10) et un couvercle (50) fermant la partie de corps cylindrique (10), dans lequel le couvercle (50) est fourni avec un élément tronconique (74) faisant saillie dans la partie de corps cylindrique (10), **caractérisé en ce que** l'élément tronconique (74) comporte une butée (A3) sur sa base et au moins un élément annulaire (73) sur sa surface dirigée vers l'extérieur afin de maintenir axialement un support d'implant (20) entre la butée (A3) et l'élément annulaire (73), dans lequel l'élément annulaire (73) est formé afin de fixer le support d'implant (20) de manière amovible dans une position stable centrée dans l'espace intérieur de la partie de corps cylindrique (10).

2. Conteneur extérieur (1) pour un support d'implant (20) selon la revendication 1, dans lequel l'élément annulaire est formé comme une douille annulaire (73).

3. Conteneur extérieur (1) pour un support d'implant (20) selon la revendication 1 ou 2, dans lequel l'élément annulaire (73) est formé comme un bord circonférentiel périmétrique continu.

4. Conteneur extérieur (1) pour un support d'implant (20) selon la revendication 1 ou 2, dans lequel l'élément annulaire (73) est formé par une pluralité de convexités périmétriques.

5. Conteneur extérieur (1) pour un support d'implant (20) selon l'une quelconque des revendications précédentes, dans lequel le couvercle (50) comporte un élément analogue à une languette (75).

6. Conteneur extérieur (1) pour un support d'implant (20) selon la revendication 5, dans lequel l'élément analogue à une languette (75) est élastiquement déformable dans une direction opposée à la direction vers l'axe central (M) du conteneur extérieur (1) afin de guider le support d'implant (20).

7. Conteneur extérieur (1) pour un support d'implant (20) selon l'une quelconque des revendications précédentes, dans lequel au moins une première butée (A1) sur le conteneur extérieur (1) et une seconde butée (A2) sur le couvercle (50) fixent le support d'implant (20) dans une position stable.

8. Conteneur extérieur (1) pour un support d'implant (20) selon la revendication 7, dans lequel la partie de corps cylindrique (10) est remplie d'un liquide à stocker.

9. Conteneur extérieur (1) pour un support d'implant (20) selon la revendication 8, dans lequel le liquide à stocker est un électrolyte.

10. Conteneur extérieur (1) pour un support d'implant (20) selon l'une quelconque des revendications précédentes, dans lequel le matériau de fabrication est une matière plastique à base de polyéthylène haute densité (HDPE) ou de polyéthylène basse densité (LDPE).

11. Combinaison d'un support d'implant (20) et d'un conteneur extérieur (1) selon l'une quelconque des revendications précédentes, dans laquelle le support d'implant (20) comporte une zone symétrique en rotation dirigée vers l'intérieur (25B), qui est axialement maintenue entre la butée (A3) sur la base de l'élément tronconique (74) et l'élément annulaire (73).

12. Combinaison selon la revendication 11, dans laquelle le couvercle (50) du conteneur extérieur comporte un élément analogue à une languette (75) et dans laquelle le support d'implant (20) comporte une quasi-première zone symétrique en rotation orientée vers l'extérieur (25A), dans laquelle l'élément analogue à une languette (75) est communication avec la première zone symétrique en rotation orientée vers l'extérieur (25A).
